# EUROPEAN PATENT APPLICATION

(11) **EP 3 985 588 A1**
(43) Date of publication of application: **20.04.2022**
(21) Application number: 21200532.6
(22) Date of filing: 01.10.2021
(51) Int. Cl.: G06Q 20/34, G06Q 20/36, G06Q 20/18, G07F 7/08, G06Q 20/10, G06Q 20/38

(54) **A PAYMENT SUPPORT**

(30) Priority: 19.10.2020 IT 202000024631
(71) Applicant: Coges S.p.A., 36015 Schio (IT)
(72) Inventor: SEGALLA, Diego, Schio (IT); MENEGOTTO, Fabio, Schio (IT); MALAGUTI, Alberto, Schio (IT)
(74) Representative: Trentin, Michele

(57) **Abstract**

A payment support for payment systems comprising at least one graphic code (3) and at least one Rfid tag (6) uniquely associated with each other. Said graphic code (3) also comprising at least one address to a reserved space within a special reserved web page uniquely associated with the support (1), at least one unique identification number corresponding to the identification number of the Rfid tag (6) and at least one serial number of the Rfid tag (6) assigned upon the execution of the support (1) and also stored within the Rfid tag (6) itself. The address, unique identification number and serial number being encoded by means of a security code and the graphic code (3) allowing unique access to the reserved web page for managing the credit and information associated with the support (1).

## Description

### Definitions

In this patent, the term "unique identification number" means the number of the UID (Unique Identification Device), i.e., a unique number for the identification of the support.

### Field of application

The present invention is generally applicable to the field of payment systems to be inserted in coin, food, beverage or similar dispensing machines.

More in detail, the present invention relates to a payment support for payment systems.

### Background art

In dispensing machines of foods or items in general, a key role is played by the payment systems, i.e., by those devices which receive money in the form of coins, banknotes, cards or credit or debit supports and give their consent for the dispensing of a product or service.

The use of such payment systems is increasingly widespread as there are more and more automatic devices which contain them. A further example, in this sense, is their use for paying for products dispensed by automatic dispensing machines or for services such as payments for motorway sections, parking vehicles, etc.

However, the use of coins or banknotes as a payment method to purchase products from automatic dispensing machines entails significant cash handling costs and difficulties in obtaining accurate accounting data.

Furthermore, the low availability of coins by users, especially in cases where the purchase of products is frequent such as, for example, in the case of automatic beverage dispensing machines within companies, makes cash payment hardly convenient.

To simplify the payment process, cashless payment methods are present in the prior art, i.e., which do not include the use of cash, in which purchases are made through the use of supports on which it is possible to load a certain credit to be used at the automatic dispensing machines.

In other words, such supports typically comprise an Rfid tag, i.e., a technology with radio frequency identification, in which users load the credit locally and by means of which they can proceed to purchase the desired product. This purchase is made using the support to make the payment through the exchange of radio frequency data between the support itself and a payment system.

The money is loaded onto the known supports by making a cash deposit in the payment systems. Consequently, although the use of such supports results in a less frequent use of cash, they do not resolve the above issues regarding the management and difficulty of obtaining accurate reports.

To overcome such a drawback, payment supports are known in the state of the art with global access which include remote reloading systems by means of numerical codes printed on the Rfid tags.

However, such codes do not comprise particular security mechanisms, allowing free access to the aforementioned reserved areas. Consequently, the known supports do not ensure the security of the information contained in the Rfid tag and do not in any way ensure protection against any tampering and counterfeiting.

Furthermore, the known supports do not have any mechanism which uniquely allows the recognition of the supports in order to allow the holder to carry out the reloading operations and the management of the information with simplicity and security. Typically, the user is forced to manually register both their information and the references of their Rfid tag in the portals.

In addition, document DE 10 2011 122604 B3 is known which describes a card comprising a part made of noble metal and a chip having a microprocessor and a memory. In particular, such a card allows to ensure the authenticity of the precious metal part by means of the information contained in the chip memory, which allows verification through a network server accessible after authentication based on secret keys.

However, such a card does not allow to overcome the above drawbacks, in fact, it does not allow to perform a unique recognition such as to securely ensure the management of the card itself.

### Presentation of the invention

The object of the present invention is to provide a payment support which allows to at least partially overcome the drawbacks highlighted above.

In particular, it is an object of the present invention to provide a support which allows to limit the use of cash in order to facilitate the management and reporting thereof.

Another object of the present invention is to provide a support which allows access at a global level, i.e., which allows the credit to be reloaded and to remotely access the information contained therein.

A further object of the present invention is to provide a support comprising means for protecting information so as to limit, if not eliminate, the tampering and counterfeiting risks of the support itself.

Another object of the present invention is to provide a payment support for payment systems having mechanisms such as to uniquely allow its recognition in a simple way and such as to avoid human error as much as possible.

Said objects, as well as others which will become clearer below, are achieved by a payment support in accordance with the following claims, which are to be considered an integral part of the present patent.

In particular, it comprises at least one graphic code and an Rfid tag uniquely associated with each other.

According to an aspect of the invention, the payment support also comprises at least one address to a reserved space within a specific web page uniquely associated with the support and at least one unique identification number corresponding to the identification number of the Rfid tag.

Furthermore, according to another aspect of the invention, the support also comprises at least one serial number of the Rfid tag, assigned upon the execution of the support and also stored within the Rfid tag itself.

According to a further aspect of the invention, the aforementioned address, unique identification number and serial number are encoded by means of a security code and inserted in the graphic code.

Therefore, according to another aspect of the invention, the graphic code allows unique access to the reserved space within the special reserved web page, thus allowing, advantageously, to perform credit management operations and operations of the information associated with the support of the invention.

Still advantageously, the presence of the unique identification number and the serial number allow to associate the graphic code and the Rfid tag in order to uniquely ensure the recognition of the support without the intervention of the user.

In addition to this, still advantageously, the security encoding allows to limit, if not eliminate, the tampering and counterfeiting risks.

On close examination, access to a reserved credit management page allows, still advantageously, to reload the support through online payments such as, for example, credit card, bank transfers, PayPal and consequently limit the use of cash, simplifying the management and reporting thereof.

However, it is evident that the object of the invention is also a sales assembly which comprises at least one payment system operatively connected with a remote server and at least one support as described above. Such a remote server comprises at least the aforementioned reserved web page.

According to another aspect of the invention, the sales assembly comprises at least one Rfid tag reading and writing device and at least one processing and control logic unit.

The logic unit is operatively connected at least to the reading device to mutually control and update the information contained in the reserved web page and in the Rfid tag.

In addition to this, said objects are also achieved by an execution method of a payment support.

In particular, it comprises at least the following steps:
- creating a support body;
- coupling an Rfid tag to the support body;
- defining a unique identification number corresponding to the identification number of the Rfid tag;
- defining a serial number of the Rfid tag;
- identifying at least one connection parameter to a reserved area;
- encoding a plurality of information comprising at least the UID identification number, the serial number, the connection parameter to the reserved area to enhance the security of the information contained in the support;
- encrypting the encoded information;
- encoding the encrypted information in a graphic code;
- printing the graphic code on the support body.

Advantageously, the execution method of the invention allows to produce a payment support which allows remote access to a reserved area to globally manage the credit and the information contained therein.

Still advantageously, the encoding of the unique identification number of the Rfid tag and the corresponding serial number allow the association between the Rfid tag and the graphic code which uniquely allows the recognition thereof without the intervention of the user, thus limiting human error and making access advantageously convenient.

Furthermore, still advantageously, the encoding of the information and the consequent encryption allow to limit, if not eliminate, the tampering and counterfeiting risks.

Still advantageously, the presence of a reserved area for credit management allows the use of online payment methods to reload the support.

### Brief description of the drawings

Further features and advantages of the invention will become more evident in light of the detailed description of a preferred but non-exclusive embodiment of a payment support according to the invention, illustrated by way of non-limiting example with the aid of the accompanying drawings, in which:
FIG. 1 depicts an axonometric view of the payment support according to the invention.
FIG. 2 depicts a diagram of the sales assembly according to the invention.

### Detailed description of some preferred embodiments

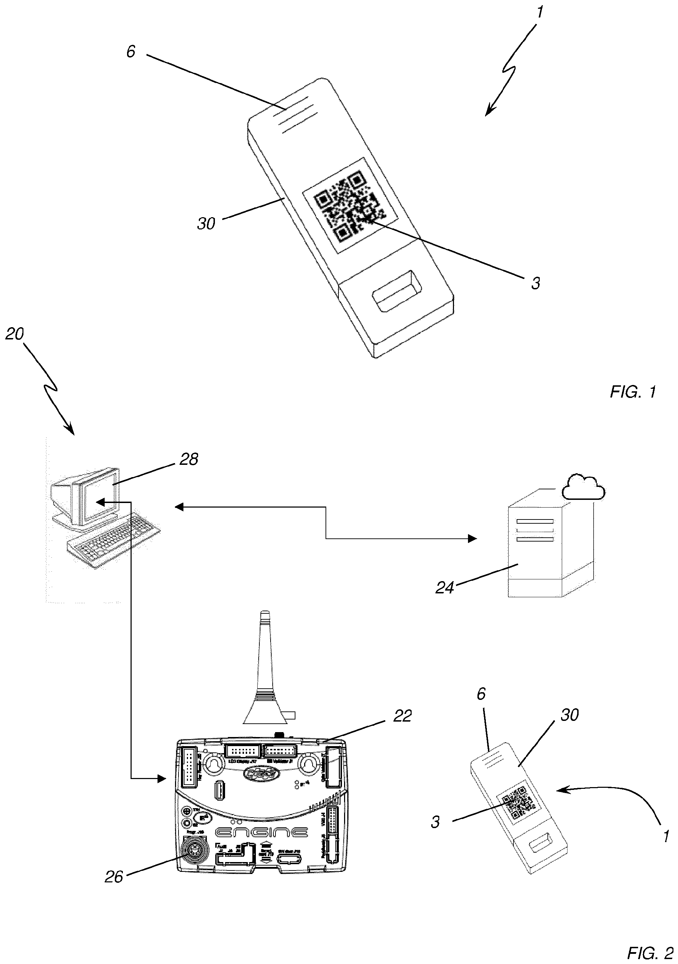

With reference to the above-mentioned drawings, in particular fig. 1, a payment support **1** for payment systems according to the invention is described. It comprises a graphic code **3**, typically but not necessarily consisting of a two-dimensional code such as "QR-CODE" or any other graphic code which can be easily decoded by devices such as PCs, tablets, smartphones, etc., a QR Code, and an Rfid tag **6** uniquely associated with each other.

According to an aspect of the invention, the graphic code **3** comprises a unique identification number and a serial number of the Rfid tag **6**.

In particular, the unique number corresponds to the identification number of the Rfid tag, while the serial number is assigned upon the execution of the support **1** and is also stored within the Rfid tag **6**.

In other words, the Rfid tag **6** and the graphic code **3** are uniquely associated with each other by the aforementioned identification code and the serial number. This association advantageously allows the unique recognition of the support **1** both in the case that a reading of the graphic code **3** is performed and in the case that the reading concerns the Rfid tag **6**.

According to another aspect of the invention, the graphic code **3** also comprises an address to a reserved space within a special reserved web page, uniquely associated with the support **1**.

According to the described embodiment, such an address to a web page is also stored within the Rfid tag **6**. However, such an aspect of the invention should not be considered limiting for different embodiments of the invention.

Therefore, the graphic code **3** advantageously allows access to a reserved web page, by means of any device available to the user for scanning the graphic code **3**, for example with a smartphone, for the management of the credit and information associated with the support **1**. Such access, still advantageously, is unique thanks to the association between the graphic code **3** and the Rfid tag **6**, and therefore to the association of the web page with the identification code and serial number.

Still advantageously, this makes it easier for the user to manage the credit and information contained in the support **1**, allowing to reload the supports remotely through online payment methods such as credit card, bank transfers and PayPal.

In addition to this, still advantageously, the ability to manage and reload the support **1** through online procedures allows to minimize the use of cash, simplifying the management and reporting thereof.

Still advantageously, the unique recognition of the support **1** allows the owners of automatic dispensing machines to be able to monitor the progress of purchases made in order to customize the products dispensed and pay any gifts to the user.

According to a further aspect of the invention, the aforementioned address, the unique identification number and the serial number are encoded by means of a security code.

Advantageously, such an encoding allows to improve the security of the support **1** limiting, if not eliminating, the tampering and counterfeiting risk.

In the embodiment described, the encoding comprises pseudo-random characters, created and introduced during the execution of the support **1**, and a control number, typically but not necessarily a hash number, to ensure the integrity of the information.

Advantageously, the presence of pseudo-random characters and a control number allow to ensure that the payment support **1** has not been counterfeited and/or tampered with.

The security encoding typically, but not necessarily, consists of the sum or multiplication of such pseudo-random characters to the string of characters containing the address to the web page, the unique identification number and the serial number.

Obviously, such aspects should not be considered limiting for different embodiments of the invention where, for example, there are no mechanisms for controlling the integrity of the information contained in the support.

According to another aspect of the described embodiment, the encoding comprises the encryption of the graphic code **3** according to a suitable encryption algorithm, typically but not necessarily the algorithm is of the AES (Advanced Encryption Standard) type, so that the information contained therein is not readable in clear text and cannot be used without having an encryption key.

Advantageously, the encryption of the graphic code **3** allows a further increase in the security level of the support **1**, further limiting the risk of incurring tampering.

Obviously, also the encryption of the graphic code should not be considered limiting for different embodiments of the invention where, for example, an encryption of the information is not performed or if such an operation is conducted according to different algorithms.

However, it is evident that the object of the invention is also a sales assembly **20**, observable in fig. 2, comprising a payment system **22** operatively connected with a remote server **24** and a support **1**, as mentioned above. Such a remote server **24**, which is typically but not necessarily a cloud, comprises the aforementioned reserved web page uniquely associated with the support **1**.

Typically, but not necessarily, the remote server **24** is operatively connected to one or more remote terminals, not depicted in the figures, generally located at the offices of the companies which manage the dispensing of the products/services through automatic dispensing machines, or at the offices of third-party companies. Such remote terminals, commonly called "back-office" terminals, allow a series of checks and actions to be carried out on user profiles, such as blocking/unblocking the profile of a specific user, sending/receiving specific messages to/from users and providing direct assistance for the refund of credit in the event of malfunctions.

According to another aspect of the invention, the sales assembly **20** also comprises a reading and writing device **26** of the Rfid tag **6**, typically but not necessarily comprised in the payment system and operatively connected thereto, and a logical processing and control unit **28** operatively connected to the device **26** to mutually control and update the information contained in the reserved web page and in the Rfid tag **6**.

Operatively, following the connection of the support **1** with the device **26**, the logic unit **28** commands the device **26** itself to read the information contained in the Rfid tag **6** of the support **1**.

Consequently, the logic unit **28** accesses the reserved web page to check the updated status of the credit and the information associated with the support **1**.

At this point, the logic unit **28** commands the device **26** to write the credit and updated information on the Rfid tag **6**, allowing the user to proceed with the purchase of desired products using the support **1** as a payment method.

According to the embodiment described, the characters of the security encoding present in the support **1** are also contained within the remote server **24**. This allows, advantageously, to perform a security procedure to verify the integrity of the information contained in the support **1** itself.

Following the connection of the support **1** to the device **26**, the logic unit **28** verifies that the security encoding contained in the support **1** matches the corresponding sequence of characters stored within the remote server **24**.

Advantageously, such a verification allows the sales assembly **20** to check that the support **1** has not been tampered with or that it has not been cloned.

In addition to this, the logic unit **28** periodically overwrites such a security encoding so as to simultaneously update the characters contained on both the support **1** and the remote server **24**. This procedure allows, still advantageously, to improve security against possible manipulations. In fact, the periodic modification allows a repeated verification of the match of the security encoding, further advantageously checking the integrity of the sales assembly **20** at each use.

Furthermore, typically, but not necessarily, if such a verification procedure finds a mismatch in the security encoding present in the device **1** and in the remote server **24**, the logic unit **28** may proceed to inhibit the associated user profile or send an integrity violation warning.

Obviously, the frequency of updating the security encoding should not be considered limiting for different embodiments of the invention where, for example, it is overwritten at each use, at predetermined time intervals or after a predetermined number of uses.

A complete description of the advantages deriving from the sales assembly **20** of the invention is omitted here, since it would replicate what is already written relative to the same during the description of the support **1**. What is observed is that it achieves all the aforementioned advantages.

A further object of the invention is an execution method of a payment support **1** for payment systems as described above.

According to such an execution method, firstly, a support body **30** is created to which an Rfid tag **6** is subsequently coupled.

Subsequently, a unique identification number corresponding to the identification number of the Rfid tag **6** and a serial number of the Rfid tag **6** are defined.

A connection parameter to a reserved area is then identified. In the embodiment described, such a connection parameter comprises an address to a reserved space within a special reserved web page and is uniquely associated with the support **1**.

Next, the plurality of information is encoded, which comprises the unique identification number, the serial number and the connection parameter, in order to enhance the security of the information contained in the support.

At this point, the encoded information is encrypted, followed by encoding in a graphic code **3**.

Finally, the graphic code **3** containing the encrypted information is printed on the support body **30**.

Advantageously, the execution method allows the production of a payment support 1 capable of allowing the user to remotely manage credit and information, through the use of a reserved area in order to allow global access.

Still advantageously, the presence of the identification number and the serial number allow to associate the Rfid tag **6** and the graphic code **3**, thus allowing the unique recognition.

Furthermore, still advantageously, the encoding of the information and the consequent encryption allow to limit, if not eliminate, the tampering and counterfeiting risks.

Still advantageously, the presence of a reserved area for credit management allows the use of online payment methods to reload the support, minimizing the cash management and reporting costs.

According to the embodiment described, the execution method includes a step in which even said address to a web page is stored within the Rfid tag **6**. However, such an aspect of the invention should not be considered limiting for different embodiments of the invention.

In light of the foregoing, it is understood that the payment support of the invention achieves all the intended objects.

In particular, the support of the invention allows to use online payment methods so as to limit the use of cash so as to facilitate the management and reporting of payments

Furthermore, the support of the invention, through the use of a reserved web page, allows a remote management of credit and information, not limiting the use thereof to only a local level.

In addition to this, the presence of an encoding and of encryption algorithms allow to limit, and possibly eliminate, the tampering and counterfeiting risks of the support of the invention. The security of the support is further ensured by the unique recognition between the graphic code and the Rfid tag.

The invention might be subject to many changes and variants, which are all included in the appended claims. Moreover, all the details and steps may furthermore be replaced by other technically equivalent elements, and the materials may be different depending on needs, without departing from the protection scope of the invention defined by the appended claims.

## Claims

1. A payment support for payment systems comprising at least one graphic code (**3**) and at least one Rfid tag (**6**) uniquely associated with each other, said graphic code (**3**) also comprising:
- at least one address to a reserved space within a special reserved web page uniquely associated with said support (**1**);
- at least one unique identification number corresponding to the identification number of said Rfid tag (**6**);
- at least one serial number of said Rfid tag (**6**), said serial number being assigned upon the execution of said support (**1**) and also stored within said Rfid tag (**6**),
said address, said unique identification number and said serial number being encoded by a security code, said graphic code (**3**) allowing unique access to said reserved web page for managing the credit and information associated with said support (**1**).

2. Support according to claim 1, **wherein** said security encoding comprises pseudo-random characters created and introduced during the processing of said graphic code (**3**).

3. Support according to claim 1 or 2, **wherein** said security code comprises a control number to ensure that said address, said unique identification number and said serial number have not been modified.

4. A sales assembly comprising:
- at least one payment system (**22**) operatively connected with a remote server (**24**);
- at least one support (**1**) according to one or more of the previous claims, said remote server (**24**) comprising at least one reserved web page;
- at least one reading and writing device (**26**) of said Rfid tag (**6**) of said support (**1**);
- at least one processing and control logic unit (**28**) operatively connected at least to said payment system (**22**) for mutually controlling and updating the information contained in said reserved web page and in said Rfid tag (**6**).

5. Execution method of a payment support (**1**) for payment systems (**22**) comprising at least the following steps:
- creating a support body (**30**);
- coupling an Rfid tag (**6**) to said support body (**30**);
- defining a unique identification number corresponding to the identification number of said Rfid tag (**6**);
- defining a serial number of said Rfid tag (**6**);
- identifying at least one connection parameter to a reserved area;
- encoding a plurality of information comprising at least said unique identification number, said serial number, said connection parameter to said reserved area to enhance the security of the content of said support (**1**);
- encrypting said encoded information;
- encoding said encrypted information in a graphic code (**3**);
- printing said graphic code (**3**) on said support body (**30**).

6. Execution method of a support according to claim 5, **wherein** said connection parameter comprises a link to a reserved web page.

7. Execution method of a support according to claim 5 or 6, **wherein** said connection parameter is uniquely associated with said support.
